# EUROPÄISCHE PATENTSCHRIFT

(11) **EP 2 637 913 B1**
(45) Veröffentlichungstag und Bekanntmachung des Hinweises auf die Patenterteilung: **25.03.2015**
(21) Anmeldenummer: 11782041.5
(22) Anmeldetag: 21.10.2011
(51) Int. Cl.: B62D 25/20

(54) **QUERTRÄGERANORDNUNG, INSBESONDERE BODENQUERTRÄGER- UND/ODER FUSSRAUMQUERTRÄGERANORDNUNG, AN EINER FAHRZEUGKAROSSERIE, INSBESONDERE AN EINER KRAFTFAHRZEUGKAROSSERIE**
CROSS MEMBER ASSEMBLY, IN PARTICULAR A FLOOR CROSS MEMBER AND/OR A FOOTWELL CROSS MEMBER ASSEMBLY, ON A VEHICLE BODY, IN PARTICULAR ON A MOTOR VEHICLE BODY
AGENCEMENT DE TRAVERSES, EN PARTICULIER DE TRAVERSES DE PLANCHER ET/OU AGENCEMENT DE TRAVERSES D'ESPACE-PIEDS DANS UNE CARROSSERIE DE VÉHICULE, EN PARTICULIER DANS UNE CARROSSERIE DE VÉHICULE AUTOMOBILE

(30) Priorität: 09.11.2010 DE 102010050824
(43) Veröffentlichungstag der Anmeldung: 18.09.2013
(73) Patentinhaber: Volkswagen Aktiengesellschaft, 38440 Wolfsburg (DE)
(72) Erfinder: BÖSCHE, Thorben, 38446 Wolfsburg (DE); THIELE, Stefan, 38116 Braunschweig (DE)
(86) Internationale Anmeldenummer: PCT/EP2011/005305
(87) Internationale Veröffentlichungsnummer: WO 2012/062406

(56) Entgegenhaltungen:
- DE-A1-102006 004 045
- US-A1- 2003 137 163
- US-A1- 2010 072 789

## Beschreibung

Die Erfindung betrifft eine Querträgeranordnung, insbesondere eine Bodenquerträger- und/oder Fußraumquerträgeranordnung, an einer Fahrzeugkarosserie, insbesondere an einer Kraftfahrzeugkarosserie, nach dem Oberbegriff des Anspruchs 1.

Derartige Querträgeranordnungen in einem Fahrzeug beziehungsweise an einer Fahrzeugkarosserie sind allgemein bekannt, so zum Beispiel aus der gattungsgemäßen DE 10 2006 004 045 A1, bei der ein Längsträger so aufgegabelt ist, dass einer seiner aufgegabelten Trägerarme an einem Fußraumquerträger angebunden werden kann. Dieser Fußraumquerträger ist aus einem Doppelblechteil mit einem oberen Blechteil und einem unteren Blechteil ausgebildet und in seinem Mittelbereich über einen Anbindungspunkt an die Stirnseite eines Mitteltunnels angebunden. Aufgrund der durch das Doppelblech hohlprofilartigen Ausbildung des Fußraumquerträgers können somit auf den unteren Längsträger wirkende Aufprallkräfte zusätzlich über den dort angebundenen, aufgegabelten Trägerarm und den Fußraumquerträger zu dem Mitteltunnel in den Hinterwagenbereich geleitet werden.

Desweiteren ist aus der DE 102 32 841 A1 eine Bodenträgeranordnung an einem Kraftfahrzeug bekannt, bei der sich ein vorderer Querträger quer zur Fahrzeuglängsachse zwischen zwei seitlich angeordneten Schwellern der Fahrzeugkarosserie erstreckt und mit diesen fest verbunden ist. Zwischen den beiden Schwellern sind Längsträger angeordnet, die sich ihrerseits vom Vorderwagen ausgehend nach hinten unter ein die Fahrgastzelle nach unten abschließendes Bodenblech erstrecken. Diese Längsträger stoßen mit einem großen Profilquerschnitt gegen das Stirnblech des vorderen Querträgers und sind nachfolgend höhenversetzt mit im Verhältnis kleinerem Profilquerschnitt unter das Bodenblech geführt, wobei der vordere Querträger mittels Stegblechen an ausgeschnittenen Schwellern festgelegt ist. Dadurch soll zum einen ein gegen Deformation geschützter Fußraum gewährleistet sein und zum anderen sollen auftretende Kräfte definiert über die Längsträger und den vorderen Querträger in Bauteile unterhalb der Fahrgastzelle eingeleitet werden.

Eine Fußraumquerträgeranordnung ist ferner auch aus der US 2008/0238148 A1 bekannt, bei der sich der Fußraumquerträger im Wesentlichen über die gesamte Fahrzeugbreite erstreckt und zwischen seitlichen Schwellern angebunden ist. Die Krafteinleitung erfolgt hier insbesondere in den seitlichen Schwellerbereich und von dort weiter in den hinteren Fahrgastzellenbereich.

Aus der EP 1 437 291 B1 ist ebenfalls ein Fußraumquerträger bekannt, an den sich, in Richtung zu den vorderen Längsträgern hin, ein stufenartig profiliertes Querelement anschließt, das mit seinen stufenartigen Abkantungen in entsprechende Ausnehmungsabschnitte des vorderen Längsträgers eingreift und zudem sogenannte Frontaufhängungselementhalter miteinander verbindet. Dabei bildet das Querelement mit dem Fußraumquerträger in Teilbereichen einen hohlprofilartigen Querschnitt auf. Zum Fahrgastraum beziehungsweise zu den sich dorthin anschließenden Trägerbauteilen weist der Fußgängerquerträger eine glatte Struktur auf.

Demgegenüber ist es Aufgabe der vorliegenden Erfindung, eine Querträgeranordnung, insbesondere eine Bodenquerträger- und/oder Fußraumquerträgeranordnung, an einer Fahrzeugkarosserie, insbesondere an einer Kraftfahrzeugkarosserie, zur Verfügung zu stellen, mittels der eine verbesserte Kraftverteilung bei einer Frontalcrashsituation erzielbar ist.

Diese Aufgabe wird gelöst mit den Merkmalen des Patentanspruchs 1. Vorteilhafte Weiterbildungen sind Gegenstand der Unteransprüche.

Gemäß Anspruch 1 ist eine Querträgeranordnung, insbesondere eine Bodenquerträger- und/oder Fußraumquerträgeranordnung, an einer Fahrzeugkarosserie vorgesehen, die einen sich in Fahrzeugquerrichtung, vorzugsweise über die gesamte Fahrzeug- beziehungsweise Karosseriebreite, erstreckenden Querträger aufweist, an dem sich in einem definierten Längsträger-Abstützbereich wenigstens ein mit Kraft, insbesondere in einer Crashsituation mit Kraft beaufschlagbarer und sich im Wesentlichen in Fahrzeuglängsrichtung erstreckender Längsträger abstützt, wobei weiter wenigstens ein sich gegenüberliegend zum kraftbeaufschlagbaren Längsträger vom Querträger weg erstreckendes und in einem Trägerbauteil-Anbindungsbereich angebundenes Trägerbauteil der Fahrzeugkarosserie vorgesehen ist. Erfindungsgemäß ist am Querträger ein definiertes, mit Bezug zu einem angrenzenden Oberflächenbereich des Querträgers erhaben oder vertieft, das heißt mit wenigstens einer Erhebung und/oder Vertiefung, ausgebildetes, kraftleitendes Lastpfadprofil vorgesehen, das sich vom Längsträger-Abstützbereich ausgehend in Richtung zu oder bis zu wenigstens einem Trägerbauteil hin erstreckt und somit einen definierten querträgerseitigen Lastpfadbereich ausbildet.

Mit einem derartigen definierten und gezielt ausgebildeten querträgerseitigen Lastpfadprofil kann auf besonders vorteilhafte Weise ein höheres Längsträgerkraftniveau abgestützt werden, und zwar bei gleichbleibendem oder sogar geringerem Gewicht des Querträgers, der insbesondere als Fußraumquerträger ausgebildet ist. Dadurch können moderne Crashanforderungen, die ein hohes Längsträgerkraftniveau bedingen und auch einen in Fahrzeughochachsenrichtung höher bauenden vorderen Längsträger fordern, auf einfache Weise ohne zusätzlichen Mehraufwand unter Beibehaltung einer herkömmlichen Karosseriestruktur im Querträgerbereich erfüllt werden.

Mit einer derartigen gezielt beziehungsweise definiert kraftleitenden Lastpfadausgestaltung kann somit eine gezielte homogene Lastverteilung im Crashfall erzielt werden.

Ein weiterer wesentlicher Vorteil eines derartigen erhaben beziehungsweise vertieft ausgebildeten kraftleitenden Lastpfadprofils liegt darin, dass dieses in einer vorteilhaften Doppelfunktion gleichzeitig auch ein den Querträger zusätzlich versteifendes Versteifungselement ausbilden kann, was zum Beispiel die Gefahr einer Fußraumintrusion im Crashfall zusätzlich reduziert.

Desweiteren kann ein derartiges Lastpfadprofil, insbesondere für den Fall, dass dieses gemäß einer besonders bevorzugten Ausgestaltung integral mit dem Querträger ausgebildet ist, vorteilhaft unmittelbar in den Querträger integriert werden, zum Beispiel durch eine sickenartige Profilierung oder Formgebung eines definierten Querträgerbereiches, wodurch sich der Bauteilaufwand vorteilhaft reduzieren lässt.

Gemäß einer besonders bevorzugten, konkreten Ausgestaltung ist vorgesehen, dass das Lastpfadprofil am Querträger zudem durch einen mehr-, insbesondere zweiteiligen beziehungsweise -schaligen Hohlprofilbereich ausgebildet ist, wodurch sich eine besonders vorteilhafte Versteifung des Lastpfadprofilbereiches ergibt.

Gemäß einer besonders bevorzugten konkreten Ausgestaltung ist vorgesehen, dass sich das Lastpfadprofil am Querträger mit einem ersten Profilabschnitt im Wesentlichen in Fahrzeugquerrichtung entlang einer definierten Wegstrecke erstreckt, wobei das Lastpfadprofil weiter wenigstens einen definierten, vom ersten Profilabschnitt ausgehenden und in Richtung zu wenigstens einem Trägerbauteil weisenden weiteren Profilabschnitt aufweist. Mit einer derartigen Lastpfadprofilgeometrie ergibt sich eine besonders vorteilhafte Kraftführung und Kraftverteilung vom Längsträger-Abstützbereich ausgehend in Richtung zu den jeweiligen Trägerbauteilen hin, über die die Kraft definiert und gezielt abgeleitet werden kann. Besonders bevorzugt ist in diesem Zusammenhang eine konkrete Ausgestaltung, bei der sich jeweils ein Lastprofil im Bereich zu beiden Seiten eines Mitteltunnels, insbesondere im fahrer- und beifahrerseitigen Fußraumbereich, in Fahrzeugquerrichtung gesehen entlang einer definierten Wegstrecke erstreckt. In diesem Fall wird dann zu beiden Seiten des Mitteltunnels eine gezielte Versteifung und/oder Kraftverteilung beziehungsweise Krafteinleitung in die jeweils angebundenen beziehungsweise in die sich vom Querträger weg erstreckenden Trägerbauteile möglich.

Besonders bevorzugt ist hier weiter eine konkrete Ausgestaltung, bei der das Lastpfadprofil eine in Richtung zu mehreren Trägerbauteilen weisende U-Form oder gabelartige Form mit einer in Fahrzeugquerrichtung verlaufenden Basis als erstem Profilabschnitt aufweist, von der voneinander beabstandete Schenkel oder Gabelarme als weitere Profilabschnitte in Richtung zu den jeweils zugeordneten Trägerbauteilen abzweigen und/oder abbiegen. Eine derartige U-förmige beziehungsweise gabelartige Profilierung lässt besonders einfach und vorteilhaft herstellen und ermöglicht eine fließende, homogene Kraftverteilung, der über den Längsträger-Abstützbereich in den Querträger eingeleiteten Kräfte.

Besonders bevorzugt ist dabei weiter eine Ausgestaltung, bei der das Lastpfadprofil, insbesondere das durch ein querträgerseitiges Hohlprofil gebildete Lastpfadprofil in Fahrzeughochachsenrichtung gesehen oberhalb eines weiteren querträgerseitigen Hohlprofils angeordnet ist und/oder in ein unterhalb angeordnetes querträgerseitiges Hohlprofil übergeht. Mit einem derartigen Aufbau lässt sich ein besonders steifer Boden- beziehungsweise Fußraumquerträgeraufbau erzielen.

Der Querträger weist bevorzugt einen sich in etwa in Fahrzeughochachsenrichtung erstreckenden, oberen Querträgerabschnitt auf, an dem sich der Längsträger abstützt, vorzugsweise flächig abstützt. Desweiteren weist der Querträger in diesem Fall dann bevorzugt einen demgegenüber unteren Querträgerabschnitt auf, an dem das wenigstens eine Trägerbauteil angebunden ist. Insbesondere mit einem derartigen Aufbau ergibt sich eine vorteilhafte Kraftableitung der über den oder die Längsträger mit Bezug zur Fahrzeughochachsenrichtung relativ hoch eingeleiteten Kräfte über den Karosseriebodenbereich, in dem regelmäßig mehrere stabile Trägerbauteile angeordnet sind, die für eine Kraftableitung vorteilhaft ausgenützt werden können, so zum Beispiel die seitlichen Schweller und/oder die Längsträgerverlängerungen und/oder eine mitteltunnelseitige Verstärkung.

Gemäß einer bevorzugten Ausgestaltung für eine vorteilhafte aufgefächerte Kraftableitung ist vorgesehen, dass mehrere voneinander in Fahrzeugquerrichtung beabstandete Trägerbauteile am Querträger angebunden sind beziehungsweise sich von diesem weg erstrecken, so dass sich das Lastpfadprofil vom Längsträger-Abstützbereich ausgehend zu wenigstens einem Teil der mehreren Trägerbauteile hin gabelartig auffächert und/oder verzweigt. Besonders bevorzugt ist hier eine konkrete Ausgestaltung, bei der sich das querträgerseitige Lastpfadprofil vom Längsträger-Abstützbereich ausgehend nach seitlich außen und nach unten zu einem seitlichen Schweller hin sowie weiter zusätzlich im Wesentlichen nach unten zu einer Längsträgerverlängerung und/oder zu einem mitteltunnelseitigen Verstärkungsträger hin verzweigt.

Wie bereits zuvor ausgeführt, ist es weiter besonders vorteilhaft, dass jeweils auf in Fahrzeugquerrichtung, mit Bezug zum Mitteltunnel gesehen gegenüberliegenden Fahrzeugseiten jeweils ein Längsträger, insbesondere bezogen auf die Fahrzeuglängsrichtung vorderer Längsträger, am Querträger an jeweils zugeordneten Längsträger-Abstützbereichen angebunden ist, welchem Längsträger jeweils ein Lastpfadprofil zugeordnet ist, dergestalt, dass mittels den beiden Lastpfadprofilen eine definierte beiderseitige Kraftableitung in Richtung zu den vom Querträger abgehenden Trägerbauteilen möglich ist.

Der Querträger selbst kann grundsätzlich mehrteilig ausgebildet sein, was jedoch einen erheblichen Bauaufwand, gegebenenfalls verbunden mit relativ hohem Gewicht, erfordert. Gemäß einer besonders bevorzugten erfindungsgemäßen Ausgestaltung ist daher vorgesehen, dass der Querträger zweiteilig ausgebildet ist und ein erstes Schalenteil, insbesondere ein erstes Blechschalenteil, umfasst, das in einer wenigstens bereichsweise überlappenden flächigen Anlageverbindung mit einem zweiten Schalenteil, insbesondere einem zweiten Blechschalenteil, verbunden ist, und zwar insbesondere unter Ausbildung wenigstens eines definierten querträgerseitigen Hohlprofilbereichs, zum Beispiel zur Ausbildung des definierten Lastpfadprofils.

Besonders vorteilhaft ist in diesem Zusammenhang eine konkrete Ausgestaltung, bei der sich der Längsträger, an dem den Längsträger-Abstützbereich ausbildenden ersten Schalenteil abstützt, während das zweite Schalenteil so am ersten Schalenteil angebunden und ausgebildet ist, dass im Bereich des Lastpfadprofils ein Hohlprofil ausgebildet ist, das fertigungstechnisch einfach herstellbar ist.

Gemäß einer hierzu weiteren besonders bevorzugten Ausgestaltung ist weiter vorgesehen, dass das erste, im montierten Zustand untere Schalenteil im Bereich links und rechts eines Mitteltunnels und/oder im lastpfadprofilseitigen Querträger eine im Querschnitt im Wesentlichen L-artige Form aufweist, auf die das einen stufenartigen und/oder einen S-förmigen Querschnitt aufweisende obere, zweite Schalenteil so aufgesetzt ist, dass diese im Bereich des vertikalen L-Schenkels der unteren Schale wenigstens bereichsweise in einer flächigen Anlageverbindung aneinanderliegen, wobei in diesem Anlagebereich das Lastpfadprofil ausgebildet ist. Der den Lastpfadprofilbereich mit ausbildende und/oder sich an den Lastpfadprofilbereich in Fahrzeughochachsenrichtung nach unten anschließende Abschnitt des zweiten, oberen Schalenteils ist so in Richtung vom ersten Schalenteil weg abgewinkelt und unmittelbar oder mittelbar auf dem horizontalen, in Fahrzeughochachsenrichtung gesehen unteren L-Schenkel des ersten Schalenteils abgestützt und/oder angebunden, dass im Bereich unterhalb des Lastpfadprofils ein Hohlprofilbereich zwischen dem ersten Schalenteil und dem zweiten Schalenteil ausgebildet ist, wodurch sich eine besonders steife und stabile Querträgerausgestaltung ergibt.

Gemäß einer weiteren besonders bevorzugten Ausgestaltung ist vorgesehen, dass der ein- oder mehrteilig, insbesondere zweiteilig, ausgebildete Querträger aus wenigstens einem warmumgeformten Blechbauteil gebildet ist, insbesondere aus wenigstens einem formgehärteten, hochfesten Blechbauteil. Mit einer derartigen konkreten Ausgestaltung lässt sich insbesondere in den crashseitig hochbelasteten Bereichen eine wesentliche Versteifung erzielen, wobei gleichzeitig das Gewicht und die Teilevielfalt der Karosseriestruktur vorteilhaft reduziert werden können und somit insgesamt günstige Bedingungen, insbesondere auch im Hinblick auf dien CO₂-Ausstoß und die Kosten, erzielt werden.

Als Trägerbauteile können zum Beispiel konkret eine Längsträgerverlängerung und/oder ein mitteltunnelseitiger Verstärkungsträger als Trägerbauteile in Fahrzeughochachsenrichtung gesehen im Wesentlichen von unten her mit dem Querträger verbunden sein. Alternativ oder zusätzlich dazu kann auch ein seitlicher Schweller als Trägerbauteil Verwendung finden, der in einem seitlichen Querträgerbereich mit dem Querträger verbunden ist.

Die Erfindung wird nachfolgend einer Zeichnung näher erläutert.

Es zeigen:
- Fig. 1: schematisch und beispielhaft eine Unteransicht einer eine erfindungsgemäße Fußraumquerträgeranordnung aufweisenden Fahrzeugkarosserie in einem Vorderwagenbereich,
- Fig. 2: eine schematische, perspektivische Prinzipdarstellung eines fahrerseitigen Fußraumbereichs mit erfindungsgemäßer Querträgeranordnung,
- Fig. 3: eine schematische Schnittdarstellung entlang der Linie A-A der Fig. 2,
- Fig. 4: eine schematische Schnittdarstellung entlang der Linie B-B der Fig. 2,
- Fig. 5: eine schematische Schnittdarstellung entlang der Linie C-C der Fig. 4,
- Fig. 6: eine schematische Schnittdarstellung entlang der.Linie D-D der Fig. 4, und
- Fig. 7: schematisch ein erfindungsgemäßer Querträger in isolierter Darstellung und zweischaliger Bauweise.

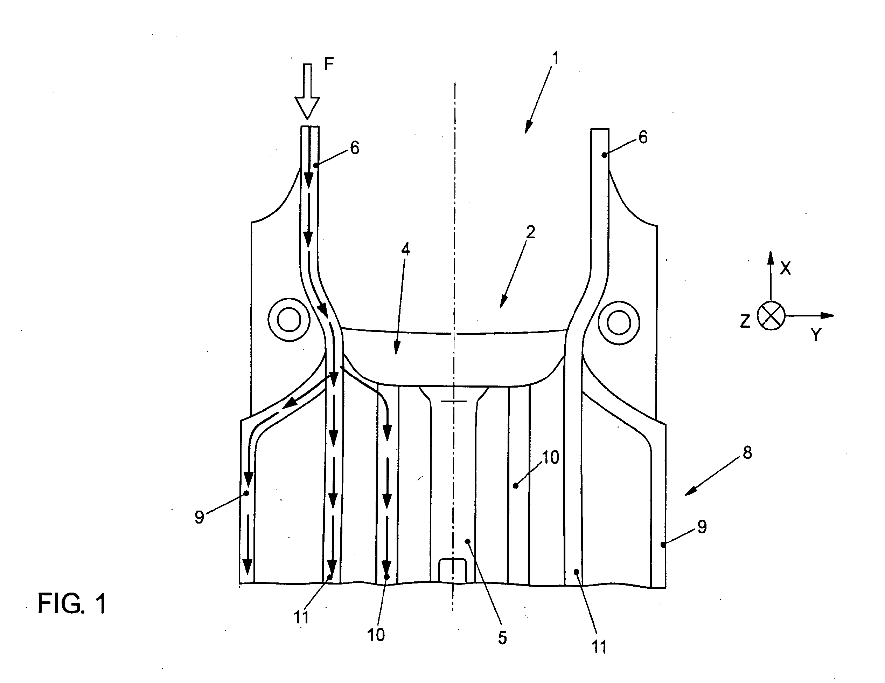

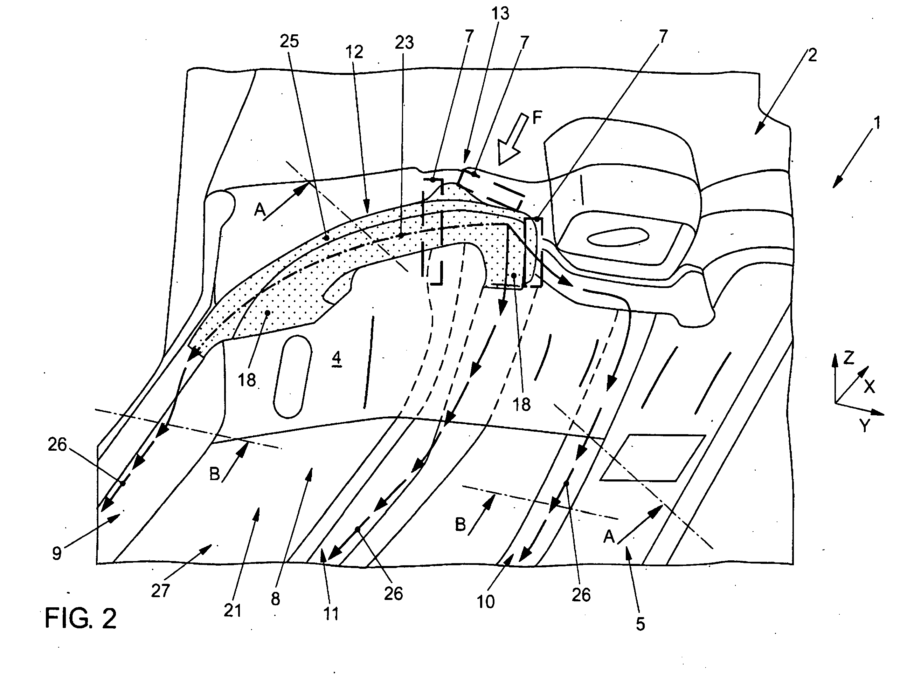

In der Fig. 1 ist schematisch und beispielhaft eine Unteransicht auf eine Fahrzeugkarosserie 1 im Bereich einer durch eine erfindungsgemäße Querträgeranordnung 2, die einen Stirnwandbereich eines Vorderwagens 3 ausgebildet, gezeigt. Im Bereich der stirnwandseitigen Boden- bzw. Fußraumquerträgeranordnung 2, die einen nachfolgend noch näher beschriebenen Boden- bzw. Fußraumquerträger 4 aufweist, schließt sich von vorne her auf beiden Seiten eines Mitteltunnels 5 jeweils ein vorderer Längsträger 6 an, der sich, wie dies insbesondere aus der Fig. 2 ersichtlich ist, mit hier lediglich schematisch dargestellten Flanschbereichen 7 flächig am Querträger 4 abstützt.

An die Querträgeranordnung 2 schließt sich im Bereich des fahrgastzellenseitigen Karosseriebereichs 9 ein, bezogen auf die Fahrzeugquerrichtung y jeweils äußerer, seitlicher Schweller 9 an. Desweiteren ist jeweils zu beiden Seiten des Mitteltunnels 5 jeweils ein den Mitteltunnel 5 versteifender Verstärkungsträger 10 vorgesehen, der ebenfalls an die Querträgeranordnung 2, gegenüberliegenden zum vorderen Längsträger 6 anschließt. Schließlich erstreckt sich von der Querträgeranordnung ausgehend eine Längsträgerverlängerung 11 in Fahrzeuglängsrichtung x gesehen nach hinten, und zwar im Bereich zwischen dem seitlichen Schweller 9 und dem tunnelseitigen Verstärkungsträger 10.

Bei einem Aufprall auf die Fahrzeugkarosserie 1 beziehungsweise bei einer Kraftbeaufschlagung des vorderen Längsträgers 6 mit einer Kraft F wird über den vorderen Längsträger 6 in Verbindung mit der Querträgeranordnung 2 und dem seitlichen Schweller 9, dem tunnelseitigen Verstärkungsträger 10 und der Längsträgerverlängerung 11 jeweils ein Lastpfad zur Verfügung gestellt, mittels dem die über die vorderen Längsträger 6 eingeleitete Kraft entsprechend homogen auf die hier beispielhaft drei Trägerbauteile (Schweller 9, tunnelseitiger Verstärkungsträger 10, Längsträgerverlängerung 11) verteilt wird.

In der Fig. 1 ist dies lediglich für die in der Bildebene linke Seite dargestellt. Es versteht sich von selbst, dass sich auf der gegenüberliegenden rechten Seite bei einer entsprechenden Krafteinleitung entsprechende Lastverteilungspfade ergeben können.

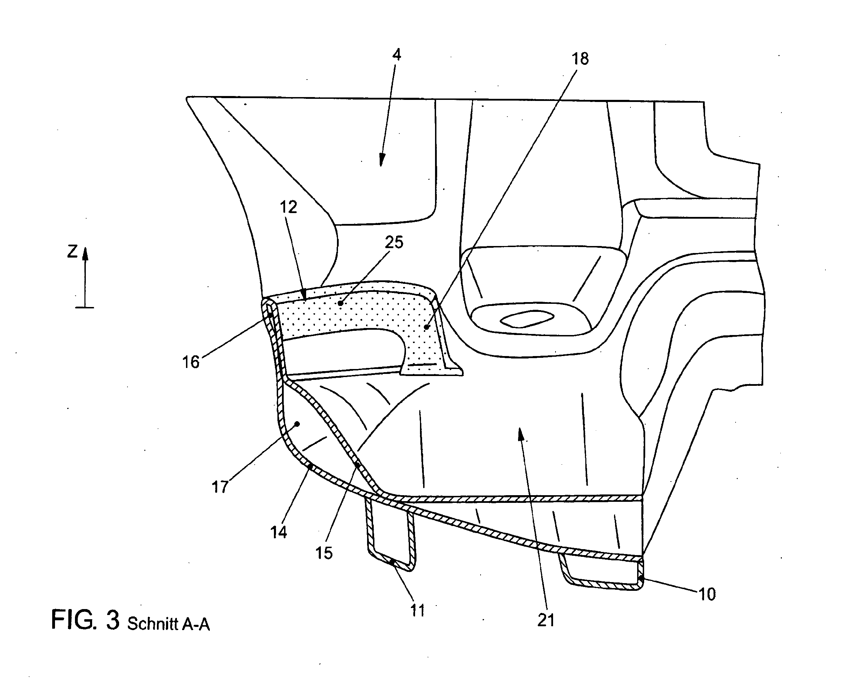

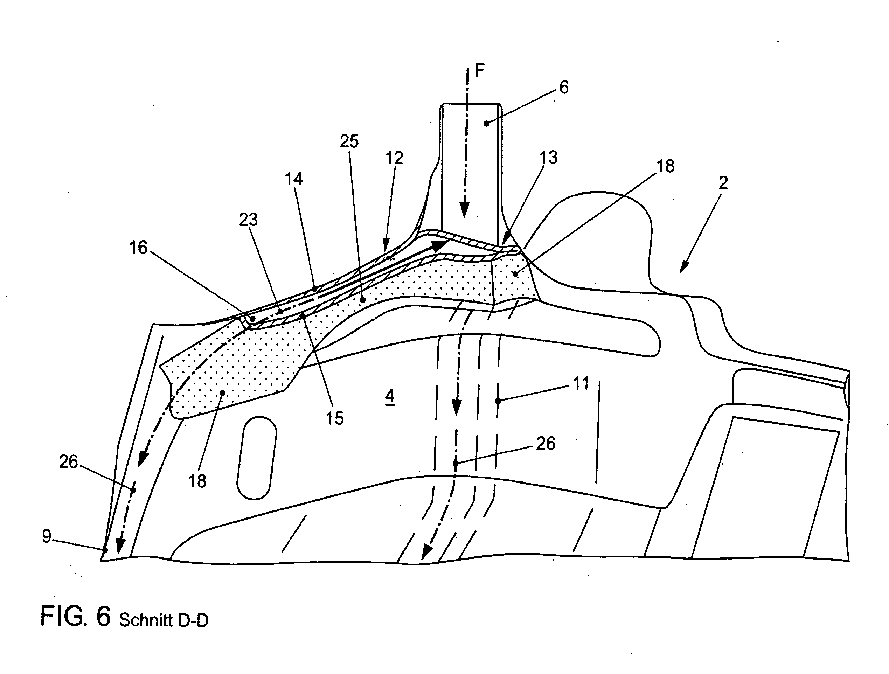

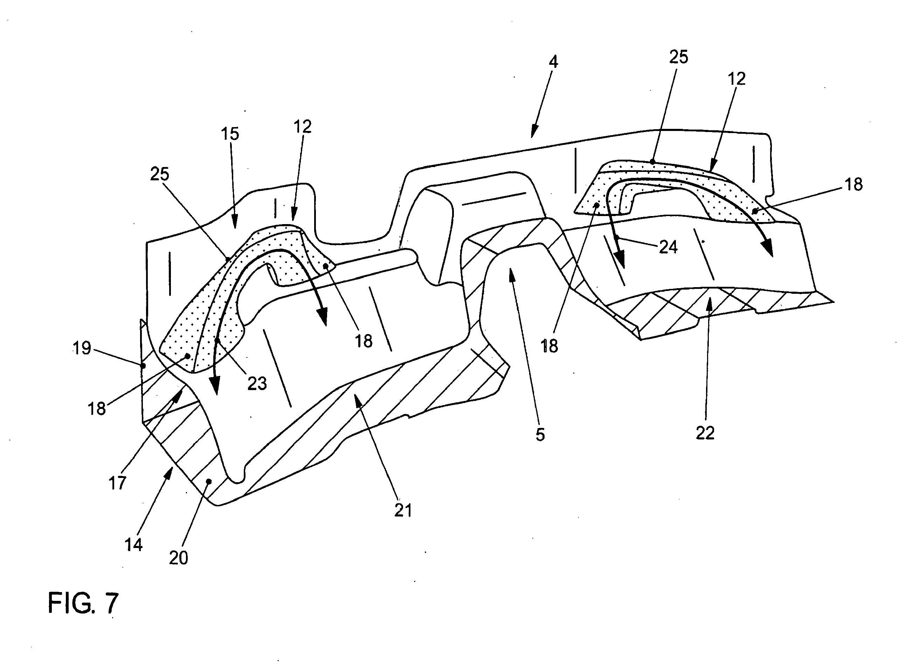

Um eine besonders vorteilhafte Kraftverteilung vom vorderen Längsträger 6 ausgehend auf die hier beispielhaft gewählten Trägerbauteile (Schweller 9, Längsträgerverlängerung 11 und tunnelseitiger Verstärkungsträger 10) erzielen zu können, ist, wie dies insbesondere in der Fig. 2 dargestellt ist, in den Querträger 4 ein sickenartig profiliertes kraftleitendes Lastpfadprofil 12 integriert, das sich vom in der Fig. 2 lediglich äußerst schematisch durch die Flanschbereiche 7 dargestellten Längsträgerabstützbereich 13 ausgehend in Richtung zu hier insbesondere dem Schweller 9 und der Längsträgerverlängerung 11 erstreckt, was nachfolgend auch in Verbindung mit den Fig. 3 bis 7 noch näher erläutert wird:
Konkret ist hierzu der Querträger 4 zweischalig aus einem ersten, oberen Blechschalenteil gebildet, das in einer wenigstens bereichsweise überlappenden flächigen Anlageverbindung mit einem zweiten, unteren Blechschalenteil 15 verbunden ist, und zwar unter Ausbildung eines Hohlprofils 16 im Bereich des Lastpfadprofils 12 sowie eines in Fahrzeughochachsenrichtung z darunterliegenden weiteren Hohlprofilbereichs 17. Das lastpfadprofilseitige Hohlprofil 16 kann dabei, wie dies insbesondere aus der Fig. 3 ersichtlich ist, wenigstens bereichsweise beabstandet oberhalb dem Hohlprofilbereich 17 angeordnet sein, oder aber auch wenigstens teilweise, insbesondere im nachfolgend noch näher beschriebenen schenkelartigen Profilabschnitt 18 in den Hohlprofilbereich 17 übergehen.
Konkret ist hierzu das erste Blechschalenteil 14, wie dies insbesondere aus der Fig. 7 hervorgeht, mit einem stufenartigen, beziehungsweise S-förmigen Querschnitt ausgebildet, das auf das eine im Wesentlichen L-artige Form aufweisende untere, zweite Blechschalenteil 15 so aufgesetzt ist, dass diese im Bereich des vertikalen L-Schenkels 19 wenigstens bereichsweise in einer flächigen Anlageverbindung aneinanderliegen und dort in diesem Anlagebereich das Lastpfadprofil 12 ausgebildet ist, während ein sich an den Lastpfadprofilbereich nach unten anschließender Abschnitt des oberen, ersten Schalenteils 14 so in Richtung vom unteren, zweiten Blechschalenteil 15 weg abgewinkelt und auf dem horizontalen in Fahrzeughochachsenrichtung gesehen unteren L-Schenkel 20 des ersten Blechschalenteils 14 abgestützt und angebunden ist, dass im Bereich unterhalb des Lastpfadprofils 12 der zuvor bereits beschriebene Hohlprofilbereich 17 zwischen den beiden Blechschalenteilen 14 und 15 ausgebildet ist.

Die beiden Blechschalenteile 14, 15 sind bevorzugt aus einem warmumgeformten Blechmaterial gebildet, insbesondere aus einem formgehärteten, hochfesten Blechmaterial, wodurch diese eine hohe Steifigkeit bei gleichzeitig günstigem Gewicht aufweisen.

Die Verbindung der beiden Blechbauteile kann dabei zum Beispiel an definierten Querträgerbereichen durch Schweißen, Kleben, Nieten oder dergleichen erfolgen.

Wie dies insbesondere aus der Fig. 7 ersichtlich ist, weist der sich im montierten Zustand zwischen den beiden gegenüberliegenden seitlichen äußeren Schwellern 9 in Fahrzeugquerrichtung erstreckende Querträger 4 auf den, bezogen auf den Mitteltunnel 5 gegenüberliegenden Fahrzeugseiten beziehungsweise Fußraumbereichen 21, 22 ein im Wesentlichen, vom Prinzip her, gleich aufgebautes beziehungsweise ausgebildetes Lastpfadprofil 12 auf, mittels dem die vom vorderen Längsträger 6 in den Querträger 4 eingeleitete Kraft in gezielter und definierter Weise einfachst auf die gewünschten Trägerbauteile (hier Schweller 9, Längsträgerverlängerung 11 und tunnelseitiger Verstärkungsträger 10) verteilt beziehungsweise umgeleitet werden kann, wie dies in der Fig. 7 lediglich äußerst schematisch durch die Pfeile 23 und 24 dargestellt ist und was nachfolgend insbesondere auch anhand der Fig. 2, 4 bis 6 noch eingehender erläutert wird.

Wie dies den Fig. 2 bis 7 entnommen werden kann, weist das Lastpfadprofil 12 hier jeweils einen ersten, sich im jeweiligen Fußraumbereich 21, 22 im Wesentlichen in Fahrzeugquerrichtung y erstreckenden horizontalen Profilabschnitt 25 auf, der hier eine U-Basis ausbildet, an den sich endseitig jeweils ein schenkelartiger Profilabschnitt 18 anschließt, wie dieser bereits zuvor in Verbindung mit der Fig. 2 kurz beschrieben wurde.

Diese beiden schenkelartigen, endseitigen Profilabschnitte 18 sind hier im Wesentlichen in Richtung zum Schweller 9 beziehungsweise in Richtung zur Längsträgerverlängerung 11 hin ausgerichtet beziehungsweise abgebogen, so dass die über den vorderen Längsträger 6 in den Querträger 4 eingeleitete Kraft (siehe Kraftpfeile 26 in den Fig. 2, 4, 5 und 6) entsprechend auf diese Trägerbauteile hin gezielt abgeleitet werden kann.

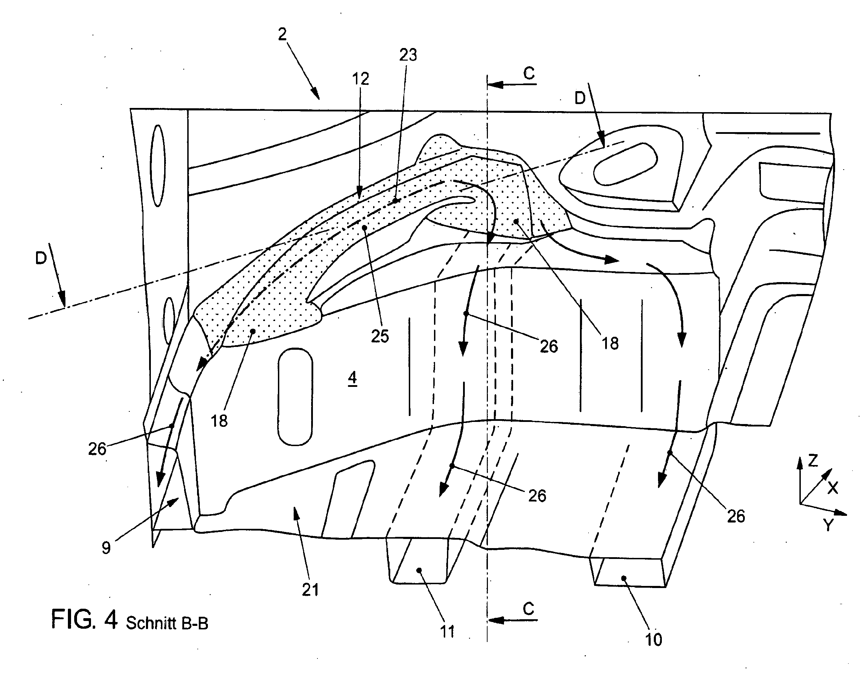

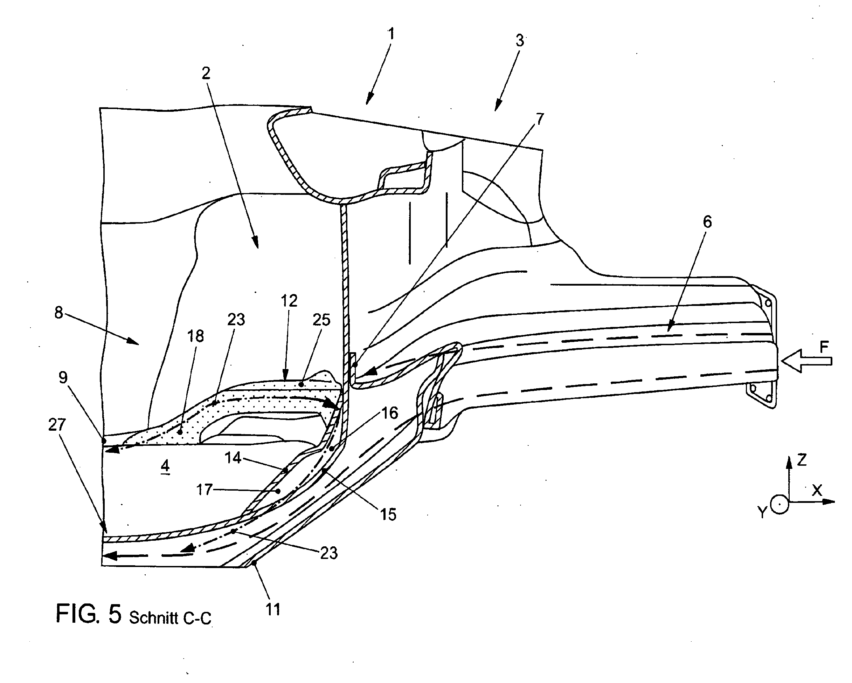

Diese Kraftverteilung ist insbesondere auch aus der Fig. 5 gut ersichtlich, die im Längsquerschnitt entlang der Linie C-C der Fig. 4 nochmals deutlich zeigt, wie über das erfindungsgemäße Lastpfadprofil 12, das am Querträger 4 in den Hohlprofilbereich 17 übergeht, die eingeleitete Kraft F auf die einzelnen Lastpfadabschnitte im fahrzeugseitigen Bodenbereich umgeleitet und abgeleitet werden kann. Aus der Fig. 5 ist dabei insbesondere sehr gut ersichtlich, wie hoch der vordere Längsträger 6 in Fahrzeughochachsenrichtung z gesehen oberhalb dem Bodenbereich 27 am Querträger 4 angebunden und mittels der Flanschbereiche 7 abgestützt ist.

Es versteht sich, dass zum Beispiel auch die Trägerbauteile (Schweller 9, Längsträgerverlängerung 11, tunnelseitiger Verstärkungsträger 10 um nur einige Beispiele zu nennen) ebenfalls aus einem warmumgeformten Blechbauteil gebildet werden können, so dass sich ein insgesamt hochfester Aufbau der Fahrzeugkarosserie 1 ergibt. Die weitere Ausgestaltung beziehungsweise Beplankung der Fahrzeugkarosserie, zum Beispiel im Bodenbereich 27 kann dann zum Beispiel mittels demgegenüber kaltumgeformten Blechbauteilen erfolgen.

## Patentansprüche

1. Querträgeranordnung, insbesondere Bodenquerträger- und/oder Fußraumquerträgeranordnung, an einer Fahrzeugkarosserie,
mit einem sich in Fahrzeugquerrichtung erstreckenden Querträger (4), an dem sich in einem definierten Längsträger-Abstützbereich (13) wenigstens ein mit Kraft, insbesondere in einer Crashsituation mit Kraft beaufschlagbarer und sich im wesentlichen in Fahrzeuglängsrichtung erstreckender Längsträger (6) abstützt, und
mit wenigstens einem sich gegenüberliegend zum kraftbeaufschlagbaren Längsträger (6) vom Querträger (4) weg erstreckenden und in einem Trägerbauteil-Anbindungsbereich angebundenen Trägerbauteil (9, 10, 11) der Fahrzeugkarosserie (1), **dadurch gekennzeichnet**,
dass am Querträger (4) ein definiertes, mit Bezug zu einem angrenzenden Oberflächenbereich des Querträgers (4) erhaben oder vertieft ausgebildetes, kraftleitendes Lastpfadprofil (12) vorgesehen ist, das sich vom Längsträger-. Abstützbereich (13) ausgehend in Richtung zu oder bis zu wenigstens einem Trägerbauteil (9, 10, 11) hin erstreckt und einen definierten querträgerseitigen Lastpfadbereich ausbildet.

2. Querträgeranordnung nach Anspruch 1, **dadurch gekennzeichnet, dass** das Lastpfadprofil (12) integral mit dem Querträger (4) ausgebildet ist und durch wenigstens eine sickenartige Profilierung oder Formgebung eines definierten Querträgerbereiches gebildet ist.

3. Querträgeranordnung nach Anspruch 1 oder Anspruch 2, **dadurch gekennzeichnet, dass** das Lastpfadprofil (12) gleichzeitig ein den Querträger (4) versteifendes Versteifungselement ausbildet.

4. Querträgeranordnung nach einem der vorhergehenden Ansprüche, **dadurch gekennzeichnet, dass** das Lastpfadprofil (12) am Querträger (4) durch einen mehrteiligen, insbesondere zweiteiligen Hohlprofilbereich ausgebildet ist.

5. Querträgeranordnung nach einem der vorhergehenden Ansprüche, **dadurch gekennzeichnet, dass** mehrere voneinander in Fahrzeugquerrichtung beabstandete Trägerbauteile (9, 10, 11), insbesondere wenigstens ein Schweller (9) und wenigstens eine Längsträgerverlängerung (11) am Querträger (4) angebunden sind, so dass sich das Lastpfadprofil' (12) vom Längsträger-Abstützbereich (13) ausgehend zu wenigstens einem Teil der mehreren Trägerbauteile (9, 10, 11) hin gabelartig auffächert und/oder verzweigt.

6. Querträgeranordnung nach einem der vorhergehenden Ansprüche,
**dadurch gekennzeichnet**,
dass sich das Lastpfadprofil (12) am Querträger (4) mit einem ersten Profilabschnitt (25) im wesentlichen in Fahrzeugquerrichtung entlang einer definierten Wegstrecke erstreckt, und
dass das Lastpfadprofil (12) weiter wenigstens einen definierten, vom ersten Profilabschnitt (25) ausgehenden und in Richtung zu wenigstens einem Trägerbauteil (9, 10, 11) weisenden weiteren Profilabschnitt (18) aufweist, wobei bevorzugt vorgesehen ist, dass das Lastpfadprofil (12) eine in Richtung zu mehreren Trägerbauteilen (9, 10, 11) weisende U-Form oder Gabelform mit einer in Fahrzeugquerrichtung verlaufenden Basis als erstem Profilabschnitt (25) aufweist, von der voneinander beabstandete Schenkel oder Gabelarme als weitere Profilabschnitte (18) in Richtung zu den jeweils zugeordneten Trägerbauteilen (9, 10, 11) abzweigen.

7. Querträgeranordnung nach Anspruch 5 oder Anspruch 6, **dadurch gekennzeichnet, dass** sich das querträgerseitige Lastpfadprofil (12) vom Längsträger-Abstützbereich (13) ausgehend nach seitlich außen und nach unten zu einem seitlichen Schweller (9) hin sowie weiter zusätzlich im wesentlichen nach unten zu einer Längsträgerverlängerung (11) und/oder zu einem mitteltunnelseitigen Verstärkungsträger (10) hin verzweigt.

8. Querträgeranordnung nach einem der vorhergehenden Ansprüche, **dadurch gekennzeichnet**,
dass der Querträger (4) einen sich in etwa in Fahrzeughochachsenrichtung erstreckenden, oberen Querträgerabschnitt aufweist, an dem sich der Längsträger (6) abstützt, vorzugsweise in einer flächigen Anlageverbindung abstützt, und
dass der Querträger (4) einen demgegenüber unteren Querträgerabschnitt aufweist, von dem das wenigstens eine Trägerbauteil (9, 10, 11) abgeht und/oder an dem das wenigstens eine Trägerbauteil (9, 10, 11) angebunden ist.

9. Querträgeranordnung nach einem der vorhergehenden Ansprüche, **dadurch gekennzeichnet, dass** jeweils auf in Fahrzeugquerrichtung mit Bezug zum Mitteltunnel gesehen gegenüberliegenden Fahrzeugseiten jeweils ein Längsträger (6), insbesondere ein bezogen auf die Fahrzeuglängsrichtung vorderer Längsträger (6), am Querträger (4) am jeweils zugeordneten Längsträger-Abstützbereich (13) angebunden ist, welchem Längsträger (6) jeweils ein Lastpfadprofil (12) zugeordnet ist, dergestalt, dass mittels den beiden Lastpfadprofilen (12) eine definierte Kraftableitung in Richtung zu den vom Querträger (4) abgehenden Trägerbauteilen (9, 10, 11) erfolgt, wobei bevorzugt vorgesehen ist, dass sich jeweils ein Lastpfadprofil (12) in Fahrzeugquerrichtung gesehen zu beiden Seiten eines Mitteltunnels (5), insbesondere als fußraumquerträgerseitiges Lastpfadprofil (12) im fahrer- und beifahrerseitigen Fußraumbereich, im wesentlichen zwischen einem seitlichen Schwellerbereich und dem Mitteltunnelbereich erstreckt.

10. Querträgeranordnung nach einem der vorhergehenden Ansprüche, **dadurch gekennzeichnet, dass** der Querträger (4) zweiteilig ausgebildet ist und ein erstes Schalenteil (14), insbesondere ein erstes Blechschalenteil, umfasst, das in einer wenigstens bereichsweise überlappenden flächigen Anlageverbindung mit einem zweiten Schalenteil (15), insbesondere einem zweiten Blechschalenteil, verbunden ist, insbesondere unter Ausbildung wenigstens eines definierten querträgerseitigen Hohlprofilbereichs (16, 17).

11. Querträgeranordnung nach Anspruch 10, **dadurch gekennzeichnet, dass** sich der Längsträger (6) an dem den Längsträger-Abstützbereich (13) ausbildenden ersten Schaltenteil (14) abstützt, wobei bevorzugt vorgesehen ist, dass das zweite Schalenteil (15) so am ersten Schalenteil (14) angebunden und ausgebildet ist, dass im Bereich des Lastpfadprofils (12) ein Hohlprofil (15) ausgebildet ist.

12. Querträgeranordnung nach Anspruch 10 oder Anspruch 11, **dadurch gekennzeichnet, dass** das erste, im montierten Zustand untere Schalenteil (14), in Fahrzeugquerrichtung gesehen im Bereich links und rechts eines Mitteltunnels (5) und/oder im lastpfadprofilseitigen Querträgerbereich, eine im Querschnitt im wesentlichen L-Form aufweist, auf die das einen stufenartigen und/oder einen S-förmigen Querschnitt aufweisende obere, zweite Schalenteil (15) so aufgesetzt ist, dass diese im Bereich des vertikalen L-Schenkels (19) des unteren Schalenteils (14) wenigstens bereichsweise in einer flächigen Anlageverbindung aneinanderliegen, wobei in diesem Anlagebereich das Lastpfadprofil (12) ausgebildet ist, und
dass der den Lastpfadprofilbereich mit ausbildende und/oder sich an den Lastpfadprofilbereich in Fahrzeughochachsenrichtung nach unten anschließende Abschnitt des oberen Schalenteils (15) so in Richtung vom unteren Schalenteil (14) weg abgewinkelt und unmittelbar oder mittelbar auf dem horizontalen in Fahrzeughochachsenrichtung gesehen unteren L-Schenkel (20) des ersten Schalenteils 814) abgestützt und/oder angebunden ist, dass im Bereich unterhalb des Lastpfadprofils (12) ein Hohlprofilbereich (17) zwischen dem ersten Schalenteil (14) und dem zweiten Schalenteil (15) ausgebildet ist.

13. Querträgeranordnung nach einem der vorhergehenden Ansprüche, **dadurch gekennzeichnet, dass** zur Anbindung des Längsträgers (6) am Längsträger-Abstützbereich (13) für eine flächige Abstützung am Querträger (4) wenigstens ein längsträgerseitiger Anlageflansch (7) vorgesehen ist.

14. Querträgeranordnung nach einem der vorhergehenden Ansprüche, **dadurch gekennzeichnet, dass** der ein- oder mehrteilig, insbesondere zweiteilig, ausgebildete Querträger (4) aus wenigstens einem warmumgeformten Blechbauteil gebildet ist, insbesondere aus wenigstens einem formgehärteten, hochfesten Blechbauteil.

## Claims

1. Cross member assembly, in particular a floor cross member and/or a footwell cross member assembly, on a vehicle body, with a cross member (4) which extends in the transverse direction of the vehicle and on which at least one longitudinal member (6), which can be subjected to force, in particular to force in a crash situation, and extends substantially in the longitudinal direction of the vehicle, is supported in a defined longitudinalmember support region (13), and with at least one support component (9, 10, 11) of the vehicle body (1), said support component extending away from the cross member (4) opposite the longitudinal member (6) which can be subjected to force, and being connected in a support-component connecting region, **characterized in that** a defined, force-conducting load path profile (12) of raised or recessed design with respect to an adjacent surface region of the cross member (4) is provided on the cross member (4), said load path profile extending from the longitudinal-member support region (13) in the direction of or as far as at least one support component (9, 10, 11) and forming a defined cross-member-side load path region.

2. Cross member assembly according to Claim 1, **characterized in that** the load path profile (12) is formed integrally with the cross member (4) and is formed by at least one bead-like profiling or shaping of a defined cross member region.

3. Cross member assembly according to Claim 1 or Claim 2, **characterized in that** the load path profile (12) simultaneously forms a stiffening element stiffening the cross member (4).

4. Cross member assembly according to one of the preceding claims, **characterized in that** the load path profile (12) is formed on the cross member (4) by a multi-part, in particular two-part hollow profile region.

5. Cross member assembly according to one of the preceding claims, **characterized in that** a plurality of support components (9, 10, 11) spaced apart from one another in the transverse direction of the vehicle, in particular at least one sill (9) and at least one longitudinal member extension (11), are connected to the cross member (4) such that the load path profile (12) fans out and/or branches in a fork-like manner from the longitudinal-member support region (13) to at least some of the plurality of support components (9, 10, 11).

6. Cross member assembly according to one of the preceding claims, **characterized in that** the load path profile (12) extends on the cross member (4) with a first profile portion (25) along a defined distance substantially in the transverse direction of the vehicle, and **in that** the load path profile (12) furthermore has at least one defined, further profile portion (18) which emerges from the first profile portion (25) and points in the direction of at least one support component (9, 10, 11), wherein it is preferably provided that the load path profile (12) has a U shape or fork shape pointing in the direction of the plurality of support components (9, 10, 11) with a base, running in the transverse direction of the vehicle, as the first profile portion (25), from which base spaced-apart limbs or fork arms as further profile portions (18) branch in the direction of the respectively assigned support components (9, 10, 11).

7. Cross member assembly according to Claim 5 or Claim 6, **characterized in that** the cross-member-side load path profile (12) branches laterally outwards and downwards from the longitudinal-member support region (13) towards a lateral sill (9) and furthermore additionally branches substantially downwards towards a longitudinal member extension (11) and/or towards a central-tunnel-side reinforcing member (10).

8. Cross member assembly according to one of the preceding claims, **characterized in that** the cross member (4) has an upper cross member portion which extends approximately in the direction of the vertical axis of the vehicle and on which the longitudinal member (6) is supported, preferably is supported in a planar bearing connection, and **in that** the cross member (4) has a lower cross member portion with respect thereto, from which the at least one support component (9, 10, 11) emerges and/or to which the at least one support component (9, 10, 11) is connected.

9. Cross member assembly according to one of the preceding claims, **characterized in that** in each case on opposite vehicle sides, as seen in the transverse direction of the vehicle with respect to the central tunnel, a respective longitudinal member (6), in particular a front longitudinal member (6) with respect to the longitudinal direction of the vehicle, is connected to the cross member (4) at the respectively assigned longitudinal-member support region (13), which longitudinal member (6) is in each case assigned a load path profile (12) in such a manner that, by means of the two load path profiles (12), a defined dissipation of force in the direction of the support components (9, 10, 11) emerging from the cross member (4) takes place, wherein it is preferably provided that a respective load path profile (12) on both sides of a central tunnel (5), as seen in the transverse direction of the vehicle, in particular in the form of a footwell-cross-member-side load path profile (12) in the driver-side and passenger-side footwell region, extends substantially between a lateral sill region and the central tunnel region.

10. Cross member assembly according to one of the preceding claims, **characterized in that** the cross member (4) is of two-part design and comprises a first shell part (14), in particular a first sheet-metal shell part, which is connected to a second shell part (15), in particular to a second sheet-metal shell part, in a planar bearing connection which overlaps at least in regions, in particular with the formation of at least one defined cross-member-side hollow profile region (16, 17).

11. Cross member assembly according to Claim 10, **characterized in that** the longitudinal member (6) is supported on the first shell part (14) forming the longitudinal-member support region (13), wherein it is preferably provided that the second shell part (15) is connected to and formed on the first shell part (14) in such a manner that a hollow profile (15) is formed in the region of the load path profile (12).

12. Cross member assembly according to Claim 10 or Claim 11, **characterized in that** the first, lower shell part (14), in the mounted state, has, in the region on the left and right of a central tunnel (5), as seen in the transverse direction of the vehicle, and/or in the load-path-profile-side cross member region, a substantially L shape in cross section, onto which the upper, second shell part (15) having a step-like and/or an S-shaped cross section is placed in such a manner that, in the region of the vertical L limb (19) of the lower shell part (14), said shell parts bear against each other at least in regions in a planar bearing connection, wherein the load path profile (12) is formed in said bearing region, and **in that** that portion of the upper shell part (15) which also forms the load path profile region and/or downwardly adjoins the load path profile region in the direction of the vertical axis of the vehicle is bent in a direction away from the lower shell part (14) and is directly or indirectly supported on and/or connected to the horizontal, lower L limb (20), as seen in the direction of the vertical axis of the vehicle, of the first shell part (14) such that, in the region below the load path profile (12), a hollow profile region (17) is formed between the first shell part (14) and the second shell part (15).

13. Cross member assembly according to one of the preceding claims, **characterized in that** at least one longitudinal-member-side bearing flange (7) is provided for connecting the longitudinal member (6) to the longitudinal-member support region (13) for planar support on the cross member (4).

14. Cross member assembly according to one of the preceding claims, **characterized in that** the cross member (4) which is of single-part or multi-part design, in particular two-part design, is formed from at least one heat-deformed sheet-metal component, in particular from at least one shape-hardened, high-strength sheet-metal component.

## Revendications

1. Agencement de traverses, notamment agencement de traverses de plancher et/ou d'espace-pieds, au niveau d'une carrosserie de véhicule ;
avec une traverse (4) s'étendant dans la direction transversale de véhicule au niveau de laquelle s'appuie au moins un longeron (6) pouvant être sollicité avec une force, notamment dans une situation de choc, avec une force et s'étendant pour l'essentiel dans la direction longitudinale du véhicule dans une zone de maintien de longeron (13) définie et avec au moins un longeron (6) pouvant être sollicité par une force opposée s'écartant de la traverse (4) et avec un composant de support (9, 10, 11) de la carrosserie de véhicule (1) raccordé dans une zone de jonction de composant de support ;
**caractérisé en ce que** :
un profil de chemin de charge (12) défini, conducteur de force, disposé de façon surélevée ou renfoncée par rapport une zone superficielle connexe de la traverse (4), est prévu au niveau de la traverse (4), ledit profil s'étendant de la zone de maintien de longeron (13) en direction d'un composant de support (9, 10, 11) au moins et formant une zone de chemin de charge définie située du côté de la traverse.

2. Agencement de traverses selon la revendication 1, **caractérisé en ce que** le profil de chemin de charge (12) fait partie intégrante de la traverse (4) et est formé par au moins un profilage ou usinage de type sertissage d'une zone de traverse définie.

3. Agencement de traverses selon la revendication 1 ou 2, **caractérisé en ce que** le profil de chemin de charge (12) forme simultanément un élément de renforcement renforçant la traverse (4).

4. Agencement de traverses selon l'une quelconque des revendications précédentes, **caractérisé en ce que** le profil de chemin de charge (12) est réalisé au niveau de la traverse (4) par une zone de profil creux réalisée en plusieurs parties, notamment en deux parties.

5. Agencement de traverses selon l'une quelconque des revendications précédentes, **caractérisé en ce que** plusieurs composants de support (9, 10, 11) placés à une certaine distance les uns des autres dans la direction transversale de véhicule, notamment au moins un bas de caisse (9) et au moins un prolongement de longeron (11), sont raccordés à la traverse (4), de sorte que le profil de chemin de charge (12) s'évase et/ou se ramifie en forme de fourche en partant de la zone de maintien de longeron (13) et en direction d'au moins une partie des multiples composants de support (9, 10, 11).

6. Agencement de traverses selon l'une quelconque des revendications précédentes, **caractérisé en ce que** :
le profil de chemin de charge (12) s'étend (25) pour l'essentiel dans la direction transversale de véhicule le long d'un tronçon de voie défini, au niveau de la traverse (4), avec une première section de profil ;
le profil de chemin de charge (12) comporte en outre au moins une section de profil (18) définie supplémentaire partant de la première section de profil (25) et
orientée en direction d'au moins un composant de support (9, 10, 11), sachant qu'il est prévu de préférence que le profil de chemin de charge (12) comporte une forme de U ou forme de fourche orientée en direction de plusieurs composants de support (9, 10, 11) avec une base servant de première section de profil (25) s'étendant dans la direction transversale de véhicule, des branches ou bras de fourche espacés les uns par rapport aux autres et prenant la forme de sections de profil (18) supplémentaires se ramifiant en partant de ladite première section de profil et en direction des composants de support (9, 10, 11) respectivement associés.

7. Agencement de traverses selon la revendication 5 ou 6, **caractérisé en ce que** le profil de chemin de charge (12) situé du côté de la traverse se ramifie à partir de la zone de maintien de longeron (13), en partant en côté vers l'extérieur et vers le bas en direction d'un bas de caisse (9) latéral ainsi en outre davantage pour l'essentiel vers le bas en direction d'un prolongement de longeron (11) et/ou d'un support de renforcement (10) situé du côté du tunnel central.

8. Agencement de traverses selon l'une quelconque des revendications précédentes, **caractérisé en ce que** :
la traverse (4) comporte une section de traverse supérieure s'étendant approximativement dans la direction d'axe vertical et contre laquelle le longeron (6) s'appuie, appuyant de préférence dans une jonction d'appui plane ; et
la traverse (4) comportant une section de traverse relativement inférieure d'où ressort l'au moins un composant de support (9, 10, 11) et/ou auquel l'au moins un composant de support (9, 10, 11) est raccordé.

9. Agencement de traverses selon l'une quelconque des revendications précédentes, **caractérisé en ce que** respectivement un longeron (6), notamment un longeron (6) avant par rapport à la direction longitudinale du véhicule, est raccordé à la traverse (4) au niveau de la zone de maintien de longeron (13) respectivement associée, respectivement sur les côtés de véhicule opposés vus dans la direction transversale de véhicule par rapport au tunnel central, un profil de chemin de charge (12) étant respectivement associé audit longeron (6), de telle sorte qu'une déviation de force définie se produit en direction des composants de support (9, 10, 11) sortant de la traverse (4) à l'aide des deux profils de chemin de charge (12), sachant qu'il est prévu de façon préférée qu'un profil de chemin de charge (12) s'étende respectivement, vu dans la direction transversale de véhicule, par rapport aux deux côtés d'un tunnel central (5), notamment sous la forme d'un profil de chemin de charge (12) situé du côté de traverse d'espace-pieds dans la zone d'espace-pieds située du côté conducteur et passager, pour l'essentiel entre une zone latérale de bas de caisse et la zone de tunnel central.

10. Agencement de traverses selon l'une quelconque des revendications précédentes, **caractérisé en ce que** la traverse (4) est réalisée en deux parties et comporte une première partie de coque (14), notamment une première partie de coque en tôle reliée, dans une jonction d'appui plate se chevauchant au moins partiellement, avec une deuxième partie de coque (15), notamment une deuxième partie de coque en tôle, notamment par déformation d'au moins une zone de profil creux (16, 17) située du côté de la traverse définie.

11. Agencement de traverses selon la revendication 10, **caractérisé en ce que** le longeron (6) appuie contre la première partie de connexion (14) déformant la zone de maintien de longeron (13), sachant qu'il est prévu de façon préférée que la deuxième partie de coque (15) soit raccordée à la première partie de coque (14) et soit réalisée de façon à réaliser un profil creux (15) dans la zone du profil de chemin de charge (12).

12. Agencement de traverses selon la revendication 10 ou 11, **caractérisé en ce que** :
la première partie de coque (14) inférieure à l'état monté, vue dans la direction transversale de véhicule, présente, dans la zone de gauche et de droite d'un tunnel central (5) et/ou dans la zone de traverse située du côté de profil de chemin de charge, une forme pour l'essentiel de L en section transversale sur laquelle la deuxième partie de coque (15) supérieure comportant une section transversale en forme de gradins et/ou en forme de S est placée, que celles-ci reposent l'une contre l'autre dans la zone de la branche en L (19) verticale de la partie de coque (14) inférieure au moins en partie dans une jonction d'appui plane, le profil de chemin de charge (12) étant réalisé dans cette zone d'appui ; et
la section de la partie de coque (15) supérieure,
formant la zone de profil de chemin de charge et/ou connexe vers le bas, dans la zone d'axe vertical de véhicule, à la zone de profil de chemin de charge étant coudée de façon à s'écarter de la direction de la partie de coque (14) inférieure et étant soutenue et/ou rattachée directement ou indirectement sur la branche de L (20) inférieure, horizontale vue dans la direction d'axe vertical, de la première partie de coque (14),
qu'une zone de profil creux (17) est réalisée dans la zone située en dessous du profil de chemin de charge (12) entre la première partie de coque (14) et la deuxième partie de coque (15).

13. Agencement de traverses selon l'une quelconque des revendications précédentes, **caractérisé en ce qu'**au moins une bride d'appui (7) située du côté de longeron est prévue pour raccorder le longeron (6) à la zone de maintien de longeron (13) pour réaliser un appui à plat au niveau de la traverse (4).

14. Agencement de traverses selon l'une quelconque des revendications précédentes, **caractérisé en ce que** la traverse (4) réalisée en une ou plusieurs parties, notamment en deux parties, est formée à partir d'au moins un composant en tôle transformé à chaud, notamment à partir d'au moins un composant en tôle trempée à haute rigidité.
